(19) Europäisches Patentamt
European Patent Office
Office européen des brevets

(11) EP 0 807 509 B1

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(51) Int. Cl.$^6$: **B29C 47/36**, B29B 7/46, C08K 3/36, C08K 13/06, C08L 83/04

(21) Anmeldenummer: **97107157.6**

(22) Anmeldetag: **30.04.1997**

# (54) Kontinuierliches Verfahren zur Herstellung lagerstabiler Organopolysiloxanzusammensetzungen

Continuous process for making storage stable organopolysiloxane compositions

Procédé continu de fabrication de compositions d'organopolysiloxanes stables au stockage

(84) Benannte Vertragsstaaten:
**DE FR GB**

(30) Priorität: **02.05.1996 DE 19617606**

(43) Veröffentlichungstag der Anmeldung:
**19.11.1997 Patentblatt 1997/47**

(73) Patentinhaber:
**Wacker-Chemie GmbH**
**81737 München (DE)**

(72) Erfinder:
- **Schuster, Johann, Dr.**
  **84547 Emmerting (DE)**
- **Wöhrl, Helmut**
  **84503 Altötting (DE)**
- **Mersch, Johann**
  **5122 Ach (AT)**
- **Müller, Horst, Dr.**
  **84547 Emmerting (DE)**
- **Webeck, Peter**
  **84533 Marktl (DE)**

(74) Vertreter:
**Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 258 159**
**EP-A- 0 649 885**
**WO-A-92/13694**
**DE-A- 3 243 194**
**DE-A- 4 005 823**
**US-A- 4 208 316**
**US-A- 4 797 080**

- **PLASTVERARBEITER, Bd. 45, Nr. 10, 1.Oktober 1994, Seiten 90-95, XP000477138 WOLFGANG KLÖHN : "KONTINUIERLICH ARBEITENDE KNET- UND EXTRUSIONSMASCHINE CONTINUOUS COMPOUNDING AND EXTRUDING MACHINE"**
- **PATENT ABSTRACTS OF JAPAN vol. 095, no. 005, 30.Juni 1995 & JP 07 041562 A (TORAY DOW CORNING SILICONE CO LTD), 10.Februar 1995,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7/3.6

## Beschreibung

Die Erfindung betrifft ein Verfahren zur Herstellung von lagerstabilen Organopolysiloxanzusammensetzungen, bei dem Organopolysiloxane und vorhydrophobierte oxidische verstärkende Füllstoffe in einer Knetmaschine mit in Reihe nebeneinander angeordneten Knetkammern vermischt und geknetet werden.

Zusammensetzungen aus Organopolysiloxan und hydrophobem oxidischem verstärkendem Füllstoff müssen zum gleichmäßigen Dispergieren des Füllstoffes, zur Verbesserung der Lagerstabilität der Zusammensetzungen und zum Erreichen von guten mechanischen Eigenschaften der aus den Zusammensetzungen hergestellten Sillkonkautschukvulkanisate intensiv geknetet werden.

Ein Verfahren zur kontinuierlichen Herstellung von bei Raumtemperatur kondensationsvernetzbaren Silikonmassen unter Verwendung von pyrogener Kieselsäure ist beschrieben in US-A-4,737,561. Dort werden die Bestandteile der Silikonmassen zuerst in einem kontinuierlich arbeitenden geschlossenen Mischer vereinigt und danach in einem oszillierenden Pilgerschrittkneter mit Katalysator versetzt, homogenisiert und entgast.

In der AU-A-91 76 256 ist ein Verfahren zur kontinuierlichen Herstellung von Grundmassen für additionsvernetzbare Silikonmassen beschrieben. In einem Doppelschneckenextruder werden vinylendständiges Polydimethylsiloxan, hydrophile pyrogene Kieselsäure, Wasser und Hexamethyldisilazan vermischt. Dabei wird die hydrophile Kieselsäure durch Wasser und Hexamethyldisilazan hydrophobiert. Die Hydrophobierung findet also in-situ statt.

Die vorstehend beschriebenen Schneckenreaktoren, nämlich oszillierender Pilgerschrittkneter und Doppelschneckenextruder erlauben kein ausreichend intensives Kneten der Silikonmassen, da die zu geringe Verweilzeit der Massen im Reaktorraum nur geringfügig variiert werden kann. Selbst bei einer Reduzierung des Durchsatzes ändert sich die Verweilzeit kaum, da die Schnecken eine konstante Förderwirkung aufweisen. Bei einer Verringerung der Drehzahl kann zwar die Verweilzeit etwas verlängert werden, dafür ist jedoch die Knetwirkung reduziert.

Zusätzlich weist das in der AU-A-91 76 256 beschriebene in-situ-Verfahren den Nachteil hoher Emissionen auf, die an jeder Knetmaschine auftreten und dadurch schwer beherrschbar werden. Weiter ist eine gezielte Steuerung der Hydrophobierung kaum möglich und auch Korrekturen der Füllstoffgehalte der Zusammensetzungen sind nicht mehr möglich, da geeignete Füllstoffe fehlen.

Ein Verfahren zur Vorhydrophobierung von oxidischem verstärkendem Füllstoff ist in US-A-5,057,151 beschrieben. Dort wird der hydrophile Füllstoff in einem Überschuß an Hydrophobierungsmittel unter mechanischer Beanspruchung hydrophobiert. Anschließend wird überschüssiges Hydrophobierungsmittel abgezogen und in den Prozeß zurückgeführt.

Beim Vorhydrophobieren des Füllstoffes ist es möglich, den Hydrophobierungsgrad gezielt zu steuern und in weiten Grenzen zu variieren, wobei hohe und/oder gleichmäßige Hydrophobierungsgrade möglich sind, was für viele Anwendungen Voraussetzung ist. Das Verfahren zur Vorhydrophobierung erlaubt es, den Füllstoff so zu hydrophobieren, daß damit durch einfaches Mischen des hydrophobierten Füllstoffes mit Organopolysiloxan und anschließendes Kneten der Mischung sog. Grundmassen für vernetzbare Organopolysiloxanzusammensetzungen hergestellt werden können. Die Verwendung von vorab hydrophobiertem Füllstoff führt zu einer deutlichen Kapazitätssteigerung der Mischorgane. Emissionen werden auf eine zentrale Anlage, nämlich die Hydrophobieranlage, begrenzt und sind dadurch leichter beherrschbar. Der Verbrauch an Hydrophobierungsmittel kann gegenüber dem in-situ-Verfahren deutlich reduziert werden. Der Füllstoffgehalt der Zusammensetzungen läßt sich nachträglich im Bedarfsfall leicht durch Zusatz von weiterem Füllstoff korrigieren.

In diskontinuierlichen Knetern, wie Doppelmuldenknetern können Zusammensetzungen aus Organopolysiloxan und hydrophobem oxidischem verstärkendem Füllstoff (= Grundmassen) mit hoher Lagerstabilität hergestellt werden, bei denen die auf Basis dar Zusammensetzungen hergestellten Silikonkautschukvulkanisate sehr gute mechanische Eigenschaften aufweisen.

Jedoch erfordern die diskontinuierlichen Kneter sehr lange Chargenlaufzeiten von bis zu 25 h. Aufgrund der sich daraus ergebenden geringen Raum-Zeit-Ausbeuten ist die Herstellung der Zusammensetzungen sehr kostenintensiv.
Die Kneter werden nach Beenden des Knetprozesses gekippt, um die Zusammensetzungen aus den Knetern auszutragen. Da die Zusammensetzungen, insbesondere die hochviskosen Zusammensetzungen, nur unvollständig aus den Knetern fließen, muß von Hand nachgeholfen und die Kneter ausgekratzt werden.
Die Kneter arbeiten unter Schutzgas, da sich im Gasraum Gase sammeln können, die bei Anwesenheit von Sauerstoff explosive Gemische bilden können.
Der Knetprozeß kann ferner nicht gesteuert werden, da erst nach Kneten -der Zusammensetzung festgestellt werden kann, ob die Produktqualität der Spezifikation entspricht. Tritt eine Abweichung des Sollwertes auf, muß die gesamte Charge umgearbeitet werden.

In WO-A-92/13694 ist die kontinuierliche Herstellung von HTV-Siliconmassen aus Vinylgruppen-endständigem Diorganopolysiloxan und hydrophober Kieselsäure in einem oszillierenden Einwellenpilgerschrittkneter beschrieben.

In EP-A-258 159 ist die kontinuierliche Herstellung von Grundmischungen für HTV-Siliconmassen aus Diorganopolysiloxan und hydrophober Kieselsäure in einem Doppelwellenextruder beschrieben.

In W. Klöhn, Kontinuierlich arbeitende Knet- und Extrusionsmachine. Plastverarbeiter, Seite 90-95, Heidelberg 1994, ist die Herstellung von Silikonkautschuk mit hochaktivem Siliciumdioxid in einer Mehrkammer-Knetmaschine genannt. Die Knetmaschine weist in Reihe nebeneinander angeordnete Knetkammern auf, die jeweils zwei achsparallele Knetwerkzeuge enthalten. Die Khetkammern sind durch quer zu den Achsen der Knetwerkzeuge passierbare Öffnungen miteinander verbunden.

Der vorliegenden Erfindung liegt die Aufgabe zugrunde, ein Verfahren zur Herstellung einer aus Organopolysiloxan und hydrophobem oxidischem verstärkendem Füllstoff bestehenden Zusammensetzung bereitzustellen, bei dem große Raum-Zeit-Ausbeuten erreicht werden und die Zusammensetzungen intensiv geknetet werden können, wobei der Knetprozeß gut gesteuert werden kann.

Die Erfindung betrifftein Verfahren zur Herstellung von Organopolysiloxanzusammensetzungen, bei dem

(1) Organopolysiloxane, die durchschnittlich mindestens 2 an Silicium gebundene Reste pro Molekül aufweisen, die ausgewählt werden aus

(a) Kohlenwasserstoffresten mit aliphatischen Kohlenstoff-Kohlenstoff-Mehrfachbindungen
(b) Wasserstoffatomen und
(c) Hydroxylgruppen und

(2) vorhydrophobierte oxidische verstärkende Füllstoffe mit einem durch die Hydrophobierung erhaltenen Kohlenstoffgehalt von mindestens 0,5 Gew.-%
in einer Knetmaschine vermischt und geknetet werden, dadurch gekennzeichnet, daß eine Knetmaschine 1 eingesetzt wird mit Wenigstens drei in Reihe nebeneinander angeordneten Knetkammern **2**, die jeweils zwei achsparallele, gleich- oder gegensinnig antreibbare Knetwerkzeuge **3** enthalten und die durch quer zu den Achsen **4** der Knetwerkzeuge **3** passierbare Öffnungen **5** miteinander verbunden sind, wobei die erste Knetkammer **2** eine Beschickungsöffnung **6** und die letzte Knetkammer **2** eine Austragsöffnung **7** aufweisen, vermischt und geknetet werden,
wobei in einem ersten Schritt nur ein Teil der Organopolysiloxane (1) mit den Füllstoffen (2) vermischt wird, die Mischung in einem zweiten Schritt geknetet wird, bis die Viskosität einen konstanten Wert erreicht hat und in einem dritten Schritt die Mischung mit dem Rest der Organopolysiloxane (1) vermischt wird, mit der Maßgabe, daß die für den dritten Schritt eingesetzten Knetkammern mindestens eine zusätzliche Beschickungsöffnung besitzen.

Als Organopolysiloxane (1) werden vorzugsweise lineare oder verzweigte Organopolysiloxane aus Einheiten der allgemeinen Formel I

$$R^1_aR^2_bSiO_{\frac{4-a-b}{2}} \qquad (I),$$

eingesetzt, wobei

**$R^1$** einwertige, gegebenenfalls mit Halogenatomen substituierte $C_1$- bis $C_{10}$-Kohlenwasserstoffreste, die frei sind von aliphatischen Kohlenstoff-Kohlenstoff-Mehrfachbindungen,
**$R^2$** Wasserstoffatome, Hydroxylgruppen oder einwertige Kohlenwasserstoffreste mit aliphatischer Kohlenstoff-Kohlenstoff-Mehrfachbindung mit 2 bis 8 Kohlenstoffatomen je Rest,
**a** die Werte 0, 1, 2 oder 3 und
**b** die Werte 0, 1 oder 2 bedeuten, mit der Maßgabe, daß durchschnittlich mindestens 2 Reste **$R^2$** je Molekül vorliegen.

Die Organopolysiloxane (1) besitzen vorzugsweise eine durchschnittliche Viskosität von mindestens 10, insbesondere mindestens 1000 mPa • s, und vorzugsweise höchstens $10^8$, insbesondere höchstens $10^5$ mPa • s bei 25°C.

Beispiele für unsubstituierte Kohlenwasserstoffreste **$R^1$** sind $C_1$- bis $C_{10}$-Alkyl-, $C_1$- bis $C_{10}$-Alkaryl- oder $C_1$- bis $C_{10}$-Aralkylreste deren Alkylteil gesättigt ist, oder $C_1$- bis $C_{10}$-Arylreste. Beispiele für Alkylreste **$R^1$** sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest;

Cycloalkylreste, wie der Cyclohexylrest; Beispiele für Alkarylreste $R^1$ sind der α- und β-Phenylethylrest; Beispiele für Aralkylreste $R^1$ sind der Benzylrest und der 2,4-Diethylbenzylrest; Beispiele für Arylreste $R^1$ sind der Phenylrest und der Naphthylrest.
Vorzugsweise bedeutet $R^1$ $C_1$- bis $C_6$-Alkylreste und Phenylreste, insbesondere Methyl- und Ethylreste.

Beispiele für mit Halogenatomen substituierte Kohlenwasserstoffreste $R^1$ sind der 3,3,3-Trifluor-n-propylrest, der 2,2,2,2',2',2'-Hexafluorisopropylrest, der Heptafluorisopropylrest, der 3-Chlor-n-propylrest, der 2-Ethylbromidrest und der 3-Propylbromidrest. Vorzugsweise sind die Reste $R^1$ nicht substituiert.

Beispiele für einwertige Kohlenwasserstoffreste mit aliphatischer Kohlenstoff-Kohlenstoff-Mehrfachbindung mit 2 bis 8 Kohlenstoffatomen je Rest $R^2$ sind Alkenylreste, wie der Vinyl-, 5-Hexenyl-, 1-Propenyl-, Allyl-, 1-Butenyl- und 1-Pentenylrest; und Alkinylreste, wie der Ethinyl-, Propargyl- und 1-Propinylrest.

Vorzugsweise weisen die Organopolysiloxane (1) mindestens 90, insbesondere mindestens 95 Mol-% Einheiten der allgemeinen Formel I auf, in denen die Summe $a+b = 2$ beträgt.

Vorzugsweise weisen die Organopolysiloxane (1) mindestens 60, insbesondere mindestens 80, speziell mindestens 95 Mol-% Einheiten der allgemeinen Formel I auf, in denen b den Wert 0 hat.

Vorzugsweise werden auf 100 Gewichtsteile der Organopolysiloxane (1) mindestens 5, vorzugsweise mindestens 10, insbesondere mindestens 20 Gewichtsteile und höchstens 200, vorzugsweise höchstens 150, insbesondere höchstens 100 Gewichtsteile vorhydrophobierte oxidische verstärkende Füllstoffe (2) eingesetzt.

Die Füllstoffe (2) sind vorzugsweise jeweils vorhydrophobierte pulverförmige Füllstoffe, wie pyrogen hergestellte Kieselsäure, gefällte Kieselsäure und Silicium-Aluminium-Mischoxide oder faserförmige Füllstoffe, wie Asbest. Es kann eine Art von Füllstoff, es kann auch ein Gemisch von mindestens zwei Füllstoffen eingesetzt werden.
Der durch die Hydrophobierung erhaltene Kohlenstoffgehalt der Füllstoffe (2) beträgt vorzugsweise mindestens 1 Gew.-% und vorzugsweise höchstens 6 Gew.-%. Bei der Bestimmung des Kohlenstoffgehalts der Füllstoffe (2) wird durch eine Trocknung von mindestens 2 Stunden bei mindestens 200°C sichergestellt, daß der gemessene Kohlenstoffgehalt sich auf die hydrophobierende Schicht der Füllstoffe (2) bezieht.

Besonders bevorzugt als verstärkende Füllstoffe (2) sind pyrogen hergestellte Kieselsäure und gefällte Kieselsäure. Vorzugsweise beträgt die BET-Oberfläche der Füllstoffe (2) mindestens 50 $m^2/g$, insbesondere mindestens 100 $m^2/g$, speziell mindestens 150 $m^2/g$.

Die Füllstoffe (2) sind durch die Behandlung mit beispielsweise Organosilanen, -silazanen bzw. -siloxanen oder durch Verätherung von Hydroxylgruppen zu Alkoxygruppen hydrophobiert. Ein bevorzugtes Verfahren zur Hydrophobierung ist in US-A-5,057,151 beschrieben.

Die Organopolysiloxane (1a), die Kohlenwasserstoffreste mit aliphatischen Kohlenstoff-Kohlenstoff-Mehrfachbindungen besitzen, weisen vorzugsweise durchschnittlich 2 bis 10, insbesondere 2 bis 4 aliphatische Kohlenstoff-Kohlenstoff-Mehrfachbindungen pro Molekül auf. Vorzugsweise weisen die endständigen Einheiten der allgemeinen Formel I aliphatische Kohlenstoff-Kohlenstoff-Mehrfachbindungen auf. Vorzugsweise sind die aliphatischen Kohlenstoff-Kohlenstoff-Mehrfachbindungen Doppelbindungen. Die Organopolysiloxane (1a) besitzen vorzugsweise eine durchschnittliche Viskosität von mindestens 100, insbesondere mindestens 1000 mPa • s, und vorzugsweise höchstens $10^5$, insbesondere höchstens $5 \times 10^4$ mPa • s bei 25°C.

Die Organopolysiloxane (1b) mit Si-gebundenen Wasserstoffatomen weisen vorzugsweise durchschnittlich 2 bis 50, insbesondere 5 bis 20 Si-gebundene Wasserstoffatome pro Molekül auf. Die Organopolysiloxane (1b) besitzen vorzugsweise eine durchschnittliche Viskosität von mindestens 10, insbesondere mindestens 30 mPa • s, und vorzugsweise höchstens $10^6$, insbesondere höchstens 10000 mPa • s bei 25°C.

Die Organopolysiloxane (1c), die Si-gebundene Hydroxylgruppen aufweisen, besitzen vorzugsweise 2 bis 4 Hydroxylgruppen pro Molekül. Vorzugsweise besitzen sie endständige Hydroxylgruppen. Die Organopolysiloxane (1c) besitzen vorzugsweise eine durchschnittliche Viskosität von mindestens 10, insbesondere mindestens 1000 mPa • s, und vorzugsweise höchstens $10^8$, insbesondere höchstens $5 \times 10^6$ mPa • s bei 25°C.

Die mittlere Verweilzeit der Zusammensetzung in der Knetmaschine beträgt vorzugsweise höchstens eine Stunde, insbesondere höchstens 30 min.

Wenn erfindungsgemäß eine Knetmaschine mit 100 l Nettovolumen benutzt wird, können problemlos bei einer mittleren Verweilzeit von 15 bis 20 min 200 kg/h Organopolysiloxanzusammensetzung hergestellt werden, d.h. ca. 4000 kg/d.
Vergleichbare 3000 kg lagerstabile Organopolysiloxanzusammensetzungen werden erhalten, wenn in einem diskontinuierlich arbeitenden Kippkneter mit 4000 l Nettovolumen bei einer mittleren Verweilzeit von 20 h gearbeitet wird. Beim Kippkneter muß zusätzlich Zeit für die Entleerung und gegebenenfalls Reinigung dazugerechnet werden.

Die Organopolysiloxanzusammensetzungen, welche vorhydrophobierte oxidische verstärkende Füllstoffe (2) enthalten, weisen eine besonders gute Lagerstabilität auf, wenn in einem ersten Schritt nur ein Teil der Organopolysiloxane (1) mit den Füllstoffen (2) vermischt wird, die Mischung in einem zweiten Schritt bei einer Temperatur von vorzugsweise höchstens 130°C geknetet wird, bis die Viskosität der Mischung einen konstanten Wert erreicht hat und in einem dritten Schritt die Mischung mit dem Rest der Organopolysiloxane (1) vermischt wird. Vorzugsweise werden im

ersten Schritt 30 bis 80 Gew.-% der Organopolysiloxane (1) eingesetzt.

Das in drei Schritte aufgegliederte Verfahren kann in einer Knetmaschine durchgeführt werden, die wenigstens drei Knetkammern aufweist, wobei die für den dritten Schritt eingesetzten Knetkammern mindestens eine zusätzliche Beschickungsöffnung besitzen.

Vorzugsweise wird der Rest der Organopolysiloxane (1) im dritten Schritt in mindestens zwei, insbesondere mindestens drei Knetkammern zugegeben, wobei vorzugsweise in der ersten Knetkammer des dritten Schritts weniger Organopolysiloxane (1) als in den weiteren Knetkammern zugesetzt wird. Bei der Zugabe der Organopolysiloxane (1) im dritten Schritt in mehrere Knetkammern wird eine besonders homogene Organopolysiloxanzusammensetzung erhalten.

Die erfindungsgemäß eingesetzte Knetmaschine erlaubt eine Steuerung der Intensität des Knetprozesses und der Verweilzeit, weil Drehzahl und Drehrichtung der Knetwerkzeuge in den einzelnen Knetkammern unnabhängig voneinander beliebig einstellbar sind. Beispielsweise können die Drehzahlen bei der Versuchsanlage 1 bis 400 UpM betragen. Bei geeigneter Wahl der Misch- und Knetwerkzeuge sind auch noch höhere Drehzahlen möglich.

Bei der in drei Schritte aufgegliederten Verfahrensvariante können die Knetwerkzeuge der Knetkammern im ersten und im zweiten Schritt mit niedrigeren Drehzahlen als im dritten Schritt betrieben werden. Beispielsweise sind die Drehzahlen im dritten Schritt zwei- bis fünfmal so hoch als im ersten und zweiten Schritt. Wenn der erste Schritt in mehreren Knetkammern ausgeübt wird, können vorzugsweise in einer der Knetkammern die Knetwerkzeuge in Gegenrichtung betrieben werden. Dadurch wird der Füllgrad der Knetmaschine und damit die Verweilzeit verbessert.

Da in der Knetmaschine kein freier Gasraum vorhanden ist, kann auf Schutzgas verzichtet werden.

Der Produktaustrag aus der Knetmaschine stellt kein Problem dar, weil die fertigen Zusammensetzungen durch die Knetwerkzeuge leicht zur Austragsöffnung befördert werden können. Die letzte Knetkammer weist vorzugsweise Pumpflügel für den Produktaustrag auf.

Vorzugsweise weist die Knetmaschine mindestens drei, insbesondere mindestens fünf Knetkammern auf.

Zwischen einzelnen oder allen Knetkammern können Siebe, Stauscheiben oder Schieber zur Stauung der Organopolysiloxanzusammensetzungen angebracht sein. Diese Elemente können hinsichtlich ihrer Lage und der von Ihnen freigebbaren Durchlaßöffnung verstellbar sein. Dadurch läßt sich die Verweilzeit in den einzelnen Kammern beeinflussen.

Vorzugsweise sind die Knetwerkzeuge Knetschaufeln, Walzen oder Polygonscheiben.

Vorzugsweise sind in der Knetmaschine neben der Beschickungsöffnung der ersten Knetkammer weitere Beschickungsöffnungen vorhanden, die in die einzelnen Knetkammern führen oder zwischen zwei Knetkammern angeordnet sind. Vorzugsweise weist jede Knetkammer eine Beschickungsöffnung auf. Insbesondere ist die Beschickungsöffnung der ersten Knetkammer für die Beschikkung mit Feststoff geeignet und die anderen Beschickungsöffnungen für die Zudosierung von Flüssigkeiten vorgesehen. Vorzugsweise verfügt jede Knetkammer über einen separat regelbaren Antrieb, der jeweils vorzugsweise eine Drehmomentmessung aufweist. Das Drehmoment ist ein Maß für die Viskosität der Mischung in der Kammer.

Vorzugsweise sind die Knetkammern beheizbar oder kühlbar, insbesondere einzeln bei unterschiedlicher Temperatur betreibbar. Beim Kneten entsteht Friktionswärme, die vorzugsweise durch Kühlen teilweise abgeführt wird, um Überhitzung der Zusammensetzung zu vermeiden. Vorzugsweise beträgt die Temperatur beim Kneten, insbesondere bei der in drei Schritte aufgegliederten Verfahrensvariante im zweiten Schritt höchstens 150°C.

Vorzugsweise sind die Knetwerkzeuge fliegend gelagert. Die lagerseitige Gehäuse-Abschlußwandung ist dann mit Öffnungen für die Antriebswellen der Knetwerkzeuge versehen. Vorzugsweise hat das Gehäuse der Knetkammern eine quer zu den Werkzeugachsen verlaufende Trennstelle, so daß der der Lagerung abgewandte Gehäuseteil in axialer Richtung der Antriebswellen von der Trennstelle und den Knetwerkzeugen wegbewegbar ist. Eine derartig ausgestaltete Knetmaschine ist besonders leicht zu reinigen.

Eine solche Knetmaschine ist in der DE-C-40 05 823 beschrieben.

Eine Knetmaschine ist in **Fig.1,** als Schnitt im Bereich der Knetkammern skizziert:

Die Knetmaschine **1** weist sechs in Reihe nebeneinander angeordnete Knetkammern **2** auf, die jeweils zwei achsparallele Knetwerkzeuge **3** enthalten und die durch quer zu den Achsen **4** der Knetwerkzeuge passierbare Öffnungen **5** miteinander verbunden sind. Die erste Knetkammer **2** weist eine Beschickungsöffnung **6** für Feststoffe und die letzte Knetkammer **2** eine Austragsöffnung **7** auf. Die letzte Knetkammer **2** weist Pumpflügel **8** für den Produktaustrag auf. Zwischen der zweiten und dritten Knetkammer **2**, sowie zwischen der vierten und fünften Knetkammer **2** sind Siebe **9** angebracht. Neben der Beschickungsöffnung **6** der ersten Knetkammer **2** sind weitere Beschickungsöffnungen **6** vorhanden, die in eine einzelne Knetkammer **2** führen oder zwischen zwei Knetkammern **2** angeordnet sind.

Die Organopolysiloxanzusammensetzungen sind lagerstabil, und eignen sich insbesondere als Grundmassen zur Herstellung von hochwertigen kondensationsvernetzenden, peroxidisch vernetzenden und additionsvernetzenden Organopolysiloxankautschukmassen, insbesondere von Zweikomponentenmassen.

Zur Herstellung von kondensationsvernetzenden Organopolysiloxankautschukmassen werden die erfindungsgemäß hergestellten Organopolysiloxanzusammensetzungen mit Additiven wie Pigmentpasten, Weichmacher etc. versetzt. Mit speziellen Härtern können daraus Vulkanisate hergestellt werden. Zur Herstellung von additionsvernetzenden Organopolysiloxankautschukmassen werden die erfindungsgemäß hergestellten Organopolysiloxanzusammensetzungen für Komponente **A** mit Edelmetallkatalysatoren und gegebenenfalls Inhibitoren versetzt, für die Komponente **B** mit Methylwasserstoffsiloxanvernetzern und gegebenenfalls weiteren Additiven wie Pigmentpasten, Stabilisatoren etc.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20° C .

**Beispiele**

**Beispiel 1**: Kontinuierliche Herstellung einer Grundmasse für additionsvernetzende Flüssigkautschuk-Produkte

An einer Conterna® Knetmaschine von IKA-Maschinenbau Janke & Kunkel GmbH & Co.KG, Staufen, bestehend aus 12 Kammern mit einem Volumen von jeweils 10 Litern, werden in die erste Kammer 80kg/h Polydimethylsiloxan mit Vinyl-Endgruppen mit einer Viskosität von 20000 mPa • s sowie 60kg/h eines vorhydrophobierten Füllstoffs mit einer BET-Oberfläche von 300 $m^2/g$ (Wacker® HDK SKS 300) dosiert. Die ab Kammer 2 kompaktierte Masse wird bei Drehzahlen von 50 bis 70 UpM in den Kammern 2 bis 8 unter Kühlung geknetet. Die Temperatur erhöht sich dabei trotzdem auf ca 100°C. In Kammer 9, 10 und 11 wird jeweils Polydimethylsiloxan mit Vinylendgruppen mit einer Viskosität von 20000 mPa • s dosiert. Die Durchsätze betragen dabei

Kammer 9 5 kg/h
Kammer 10 15kg/h
Kammer 11 40kg/h.

Die Drehzahlen der Knetwerkzeuge in den Kammern 9-11 betragen ca. 200 UpM. Die Kammer 12 ist mit Pumpflügeln bestückt, die das Produkt in ein Entgasungsgefäß fördern. Die Verweilzeit der Grundmasse in der Knetmaschine beträgt ca 15 min. Das Entgasungsgefäß wird mit ca 5$m^3$/h $N_2$ bei einem Unterdruck von ca 200mbar gespült, um geringe Mengen an flüchtigen Siloxanen in ein Abgasreinigungssystem zu schleppen. Die Grundmasse wird aus dem Entgasungsbehälter mittels Pumpe über eine Strainereinheit in einen Vorratsbehälter ausgetragen. Die Prüfung der Grundmasse ergab folgende Werte:

| | gemessen | Spezifikation |
|---|---|---|
| Viskosität | 1300 Pas | 1100-1500 Pas |
| Transparenz | gut | gut |
| Aussehen | keine Knörzel | keine Knörzel |
| Lagerstabilität * | 20% | < 50% |

* Bei der Prüfung der Lagerstabilität, werden 200g der Grundmasse in einer Glasflasche 16h bei 150°C gelagert und vor und nach der Lagerung die Viskosität gemessen. Der Viskositätsanstieg darf dabei nicht größer als 50% sein.

**Beispiel 2** : Vergleichsversuch
Kontinuierliche Herstellung einer Grundmasse für additionsvernetzende Flüssigkautschuk-Produkte an einem Doppelwellenextruder:

In einen Doppelwellenextruder mit einer Baulänge von 36 D und einem Schneckendurchmesser von 40 mm wurden 20kg/h Polydimethylsiloxan mit einer Viskosität von 20000 mPa • s sowie 15kg/h Wacker® HDK SKS 300 dosiert. Bei einer Baulänge von 25 D wurden weitere 15 kg/h Polymer mit Vinylendgruppen und einer Viskosität von 20000 mPa.s zugeführt. Nach einer kurzen Evakuierzone bei ca 32 D wurde das Produkt über einen Strainer ausgetragen. Die Verweilzeit betrug ca 2 min, die Temperatur stieg auf 150°C an.

Ergebnis:

| | |
|---|---|
| Viskosität | 1800Pas |
| Transparenz | gut |
| Aussehen | enthielt wenige Knörzel |
| Lagerstabilität | >> 100% (Viskosität war nicht mehr meßbar) |

## Patentansprüche

1. Verfahren zur Herstellung von Organopolysiloxanzusammensetzungen, bei dem

   (1) Organopolysiloxane, die durchschnittlich mindestens 2 an Silicium gebundene Reste pro Molekül aufweisen, die ausgewählt werden aus

   (a) Kohlenwasserstoffresten mit aliphatischen Kohlenstoff-Kohlenstoff-Mehrfachbindungen
   (b) Wasserstoffatomen und
   (c) Hydroxylgruppen und

   (2) vorhydrophobierte oxidische verstärkende Füllstoffe mit einem durch die Hydrophobierung erhaltenen Kohlenstoffgehalt von mindestens 0,5 Gew.-%
   in einer Knetmaschine vermischt und geknetet werden, dadurch gekennzeichnet, daß eine Knetmaschine 1 eingesetzt wird mit wenigstens drei in Reihe nebeneinander angeordneten Knetkammern **2**, die jeweils zwei achsparallele, gleich- oder gegensinnig antreibbare Knetwerkzeuge 3 enthalten und die durch quer zu den Achsen **4** der Knetwerkzeuge **3** passierbare Öffnungen **5** miteinander verbunden sind, wobei die erste Knetkammer **2** eine Beschickungsöffnung **6** und die letzte Knetkammer **2** eine Austragsöffnung **7** aufweisen, vermischt und geknetet werden,
   wobei in einem ersten Schritt nur ein Teil der Organopolysiloxane (1) mit den Füllstoffen (2) vermischt wird, die Mischung in einem zweiten Schritt geknetet wird, bis die Viskosität einen konstanten Wert erreicht hat und in einem dritten Schritt die Mischung mit dem Rest der Organopolysiloxane (1) vermischt wird, mit der Maßgabe, daß die für den dritten Schritt eingesetzten Knetkammern mindestens eine zusätzliche Beschickungsöffnung besitzen.

2. Verfahren nach Anspruch 1, bei dem als Organopolysiloxane lineare oder verzweigte Organopolysiloxane aus Einheiten der allgemeinen Formel I

$$R^1_aR^2_bSiO_{\frac{4-a-b}{2}} \qquad (I),$$

   eingesetzt werden, wobei

   **$R^1$** einwertige, gegebenenfalls mit Halogenatomen substituierte $C_1$- bis $C_{10}$-Kohlenwasserstoffreste, die frei sind von aliphatischen Kohlenstoff-Kohlenstoff-Mehrfachbindungen,
   **$R^2$** Wasserstoffatome, Hydroxylgruppen oder einwertige Kohlenwasserstoffreste mit aliphatischer Kohlenstoff-Kohlenstoff-Mehrfachbindung mit 2 bis 8 Kohlenstoffatomen je Rest,
   **a** die Werte 0, 1, 2 oder 3 und
   **b** die Werte 0, 1 oder 2 bedeuten, mit der Maßgabe, daß durchschnittlich mindestens 2 Reste **$R^2$** je Molekül vorliegen.

3. Verfahren nach Anspruch 1 oder 2, bei dem die Organpolysiloxane (1) eine durchschnittliche Viskosität von mindestens 10, und höchstens $10^8$ mPa • s bei 25°C besitzen.

4. Verfahren nach Anspruch 2 oder 3, bei dem die Organopolysiloxane (1) mindestens 90 Mol-% Einheiten der allgemeinen Formel I aufweisen, in denen die Summe a+b = 2 beträgt.

5. Verfahren nach einem der Ansprüche 2 bis 4, bei dem die Organopolysiloxane (1) mindestens 80 Mol-% Einheiten der allgemeinen Formel I aufweisen, in denen b den Wert 0 hat.

6. Verfahren nach einem der Ansprüche 1 bis 5, bei dem auf 100 Gewichtsteile der Organopolysiloxane (1) mindestens 5, und höchstens 200 Gewichtsteile vorhydrophobierte oxidische verstärkende Füllstoffe (2) eingesetzt werden.

7. Verfahren nach einem der Ansprüche 1 bis 6, bei dem als verstärkender Füllstoff (2) pyrogen hergestellte Kieselsäure oder gefällte Kieselsäure mit einer BET-Oberfläche von mindestens 50 $m^2/g$ eingesetzt wird.

8. Verfahren nach einem der Ansprüche 1 bis 7, bei dem die Knetkammern **2** bei Bedarf geheizt oder gekühlt werden.

## Claims

1. Process for preparing organopolysiloxane compositions, in which

(1) organopolysiloxanes having, on average per molecule, at least two radicals bound to silicon, the said radicals being selected from

(a) hydrocarbon radicals containing aliphatic carbon-carbon multiple bonds
(b) hydrogen atoms and
(c) hydroxyl groups and

(2) prehydrophobicized oxidic stiffening fillers having a carbon content, obtained by hydrophobicization, of at least 0.5% by weight are blended and kneaded in a kneading machine **1**, characterized in that the kneading machine 1 used has at least three kneading chambers **2** which are arranged in series next to one another, each contain two axially parallel kneading tools **3** drivable so as to corotate or counterrotate, and communicate with one another via openings **5** through which passage is possible transversely to the axes **4** of the kneading tools **3**, the first kneading chamber **2** having a charging port **6** and the final kneading chamber **2** having a discharge port **7**,
where, in a first step, only part of the organopolysiloxanes (1) is mixed with the fillers (2), the mixture is kneaded in a second step until the viscosity has reached a constant value and, in a third step, the mixture is mixed with the remainder of the organopolysiloxanes (1), with the proviso that the kneading chambers used for the third step have at least one additional charging port.

2. Process according to Claim 1, wherein the organopolysiloxanes used are linear or branched organopolysiloxanes comprising units of the general formula I

$$R^1{}_aR^2{}_bSiO_{\frac{4-a-b}{2}} \qquad (I),$$

in which

**$R^1$** represents univalent $C_1$ to $C_{10}$ hydrocarbon radicals which may or may not be substituted by halogen atoms and are free from aliphatic carbon-carbon multiple bonds,
**$R^2$** represents hydrogen atoms, hydroxyl groups or univalent hydrocarbon radicals containing an aliphatic carbon-carbon multiple bond with from 2 to 8 carbon atoms per radical,
**a** represents the values 0, 1, 2 or 3 and
**b** represents the values 0, 1 or 2, with the proviso that on average at least two radicals **$R^2$** per molecule are present.

3. Process according to Claim 1 or 2, wherein the organopolysiloxanes (1) have an average viscosity of at least 10 and at most $10^8$ mPa • s at 25°C.

4. Process according to Claim 2 or 3, wherein the organopolysiloxanes (1) contain at least 90 mol % of units of the general formula I, in which the sum a+b = 2 .

5. Process according to any one of Claims 2 to 4, wherein the organopolysiloxanes (1) contain at least 80 mol % of units of the general formula I, in which b has the value 0.

6. Process according to any one of Claims 1 to 5, wherein per 100 parts by weight of the organopolysiloxanes (1) at least 5 and at most 200 parts by weight of prehydrophobicized oxidic stiffening fillers (2) are used.

7. Process according to any one of Claims 1 to 6, wherein the stiffening filler (2) used is fumed silicic acid or precipitated silicic acid having a BET area of at least 50 $m^2/g$.

8. Process according to any one of Claims 1 to 7, wherein the kneading chambers **2** are heated or cooled if required.

## Revendications

1. Procédé de préparation de compositions d'organopolysiloxanes, dans lequel

   (1) les organopolysiloxanes renfermant en moyenne au moins deux radicaux liés au silicium par molécule, qui sont choisis parmi

   (a) des radicaux hydrocarbonés ayant des liaisons multiples carbone-carbone aliphatiques
   (b) des atomes d'hydrogène et
   (c) des groupes hydroxy et

   (2) des charges de renforcement oxydiques préhydrophobisées ayant une teneur en carbone d'au moins 0,5% en poids, obtenue par hydrophobisation, sont mélangés et malaxés dans un malaxeur, caractérisé en ce que l'on utilise un malaxeur 1 ayant au moins trois chambres de malaxage 2 agencées en série les unes à côté des autres et qui contiennent chacune deux instruments de malaxage 3 axialement parallèles, actionnables dans le même sens ou en sens inverse, et qui sont reliées les unes aux autres par l'intermédiaire d'ouvertures 5 à travers lesquelles il est possible de passer transversalement jusqu'aux axes 4 des instruments de malaxage 3, la première chambre de malaxage 2 ayant un orifice d'alimentation 6 et la dernière chambre de malaxage 2 ayant un orifice de décharge 7, où, dans une Première étape, seule une partie des organopolysiloxanes (1) est mélangée avec les charges (2), le mélange est malaxé dans une deuxième étape jusqu'à ce que la viscosité ait atteint une valeur constante et le mélange est mélangé, dans une troisième étape avec le reste des organopolysiloxanes (1), à condition que les chambres de malaxage utilisées pour la troisième étape présentent au moins un orifice d'alimentation supplémentaire.

2. Procédé selon la revendication 1, dans lequel on utilise, en tant qu'organopolysiloxanes, des organopolysiloxanes linéaires ou ramifiés à base de motifs de formule générale I

$$R^1{}_aR^2{}_bSiO_{\frac{4-a-b}{2}} \qquad (I),$$

dans laquelle

- $R^1$ représente des radicaux hydrocarbonés en $C_1$ à $C_{10}$ monovalents, éventuellement substitués par des atomes d'halogène et qui sont dépourvus de liaisons multiples carbone-carbone aliphatique,
- $R^2$ représente des atomes d'hydrogène, des groupes hydroxy ou des radicaux hydrocarbonés monovalents à liaison multiple carbone-carbone aliphatique, ayant de 2 à 8 atomes de carbone par radical,
- a vaut 0, 1, 2 ou 3 et
- b vaut 0, 1 ou 2, à condition qu'en moyenne au moins 2 radicaux $R^2$ soient présents par molécule.

3. Procédé selon la revendication 1 ou 2, dans lequel les organopolysiloxanes (1) présentent une viscosité moyenne d'au moins 10, et d'au plus $10^8$ mPa.s à 25°C.

4. Procédé selon la revendication 2 ou 3, dans lequel les organopolysiloxanes (1) renferment au moins 90% en moles de motifs de formule générale I, dans lesquels la somme a+b = 2 .

5. Procédé selon l'une quelconque des revendications 2 à 4, dans lequel les organopolysiloxanes (1) renferment au moins 80% en moles de motifs de formule générale I, dans lesquels b vaut 0.

6. Procédé selon l'une quelconque des revendications 1 à 5, dans lequel pour 100 parties en poids des organopolysiloxanes (1), on utilise au moins 5 et au plus 200 parties en poids de charges de renforcement oxydiques préhydrophobisées (2).

7. Procédé selon l'une quelconque des revendications 1 à 6, dans lequel on utilise, en tant que charge de renforcement (2), de l'acide silicique préparé par pyrogénation ou de l'acide silicique précipité ayant une surface spécifique BET d'au moins 50 $m^2/g$.

8. Procédé selon l'une quelconque des revendications 1 à 7, dans lequel les chambres de malaxage 2 sont chauffées ou refroidies selon le besoin.

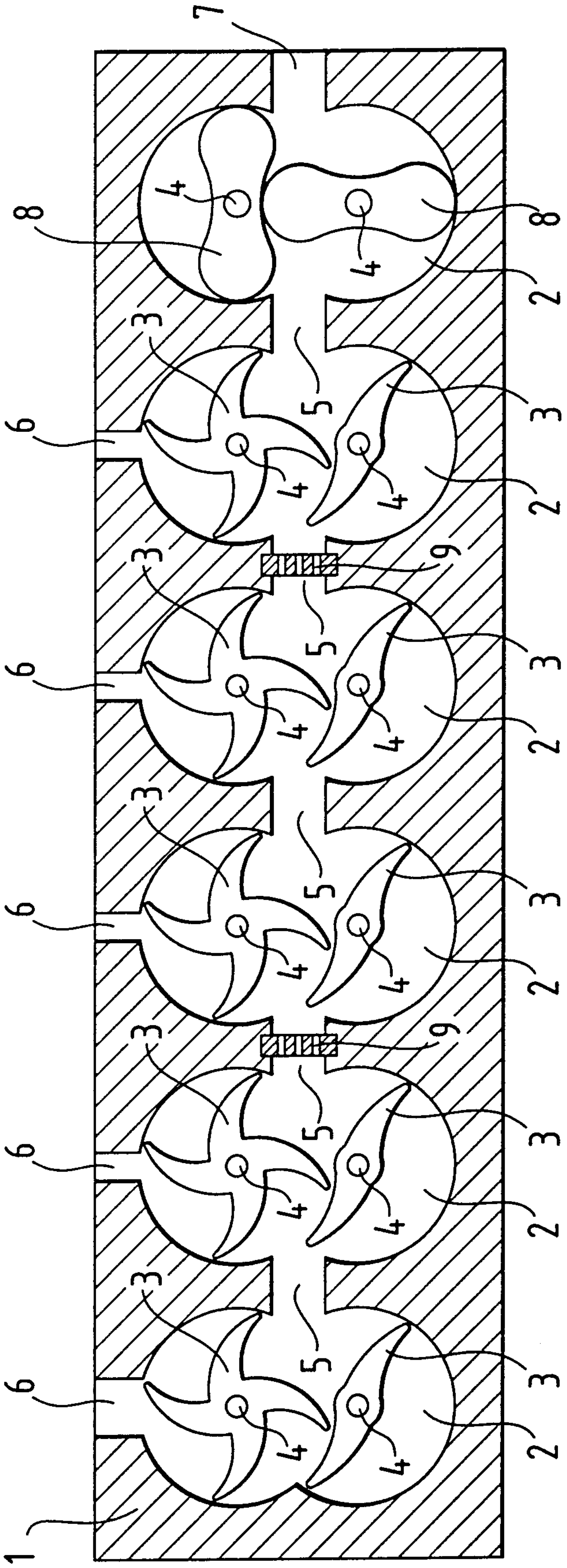


Fig. 1